# EUROPÄISCHE PATENTSCHRIFT

(11) **EP 2 820 982 B1**
(45) Veröffentlichungstag und Bekanntmachung des Hinweises auf die Patenterteilung: **27.09.2017**
(21) Anmeldenummer: 14166973.9
(22) Anmeldetag: 05.05.2014
(51) Int. Cl.: A47J 31/40

(54) **Heißgetränkezubereitungsvorrichtung mit rotatorisch und axial verstellbaren Dosiermitteln**
Hot beverage preparation device with rotationally and axially adjustable dosing devices
Dispositif de préparation de boissons chaudes doté de moyens de dosage rotatifs réglables axialement

(30) Priorität: 02.07.2013 DE 102013106917
(43) Veröffentlichungstag der Anmeldung: 07.01.2015
(73) Patentinhaber: Eugster/Frismag AG, 8580 Amriswil (CH)
(72) Erfinder: Giezendanner, Stefan, 9054 Haslen (CH)
(74) Vertreter: Wagner, Kilian

(56) Entgegenhaltungen:
- WO-A1-2011/160938
- DE-U1- 29 612 414
- US-A1- 2012 285 997

## Beschreibung

Die vorliegende Erfindung betrifft eine Heißgetränkezubereitungsvorrichtung nach dem Oberbegriff des Anspruchs 1 sowie ein Verfahren zum Betrieben einer Heißgetränkezubereitungsvorrichtung nach dem unabhängigen Verfahrensanspruch 15.

Bei Heißgetränkezubereitungsvorrichtungen ist es bekannt, durch eine Pulverzufuhr Pulver, insbesondere vorbehandeltes Kaffeepulver wie entkoffeiniertes Kaffeepulver, zu einer Brüheinheit zuzuführen.

Wird zu viel Pulver in die Brüheinheit zugeführt, kann es in der Vorrichtung zu Verstopfungen kommen, durch die das Gerät nicht mehr voll funktionsfähig ist und was gegebenenfalls aufwändige Reinigungen und/oder Reparaturen notwendig macht. Deshalb ist es aus dem Stand der Technik bekannt, bei Heißgetränkezubereitungsvorrichtungen die Zufuhr zur Brühkammer durch Dosiermittel dosiert, insbesondere volumenbegrenzt, wird.

Aus der DE 199 15 045 A1 ist eine Dosiervorrichtung für eine Kaffeemaschine bekannt, bei der eine an der Oberseite der Kaffeemaschine angeordnete Wandung um eine Schwenkachse verschwenkt wird. Das Verschwenken erfolgt durch einen in Bezug zur Drehachse radial an der Wandung angebrachten Handgriff, wodurch zum Betätigen der Dosiervorrichtung eine umständliche Bewegung der Hand über einen weiten Führungsweg vollzogen werden muss, wobei hierfür auch der Unterarm entlang der Kreisbahn des Handgriffs bewegt werden muss.

Aus der DE 20 2010 01 021 U1 ist es bekannt, bei einem Kaffeevollautomat eine entnehmbare Schublade vorzusehen. Im Schubladenboden ist eine Aussparung zum Auslassen von Pulver vorgesehen, bei der grundsätzlich die Gefahr besteht, dass beim Einsetzen bzw. Ausziehen der Schublade Pulver unkontrolliert aus der Schublade ausgelassen wird.
Aus der US 20120285997 A1 ist ein Granulatdispenser bekannt, der eine Dosieraufnahme umfasst, die innerhalb eines Gehäuses ausschließlich rotierbar angeordnet ist und zwar um ihre Längsachse, um in einer oberen Rotationsposition Granulat aus einem Vorrat aufzunehmen und dieses in einer unteren Rotationsposition nach unten auszugeben.
Die US 4,944,510 zeigt eine Kaffeebohnendosiereinrichtung mit einer Bohnenaufnahme, die zwischen zwei Axialpositionen verstellbar ist, um in einer ersten Axialposition Bohnen aus einem Vorrat aufzunehmen und diese in der zweiten Position wieder abzugeben.
Die DE 296 12 414 U1 zeigt eine sogenannte Spenderbox für Kaffeemehl mit einer einem Gehäuse rotatorisch angeordneten Dreheinheit.

Aus der WO 2011/160938 A1 ist eine ausschließlich rotierbare Dosiereinrichtung für Pulver bekannt.
Ausgehend von dem vorgenannten Stand der Technik liegt der Erfindung die Aufgabe zugrunde, eine Heißgetränkezubereitungsvorrichtung mit einer Dosiervorrichtung mit besserer Bedienbarkeit und ein entsprechendes Bedienverfahren anzugeben.

Diese Aufgabe wird durch die Heißgetränkezubereitungsvorrichtung mit den Merkmalen des Anspruchs 1 sowie ein Verfahren mit den Merkmalen des Anspruchs 15 gelöst. Zur Vermeidung von Wiederholungen sollen vorrichtungsgemäß offenbarte Merkmale als verfahrensgemäß offenbart und beanspruchbar gelten sowie verfahrensgemäß offenbarte Merkmale als vorrichtungsgemäß offenbart und beanspruchbar gelten.
Eine erfindungsgemäße Heißgetränkezubereitungsvorrichtung, insbesondere als Kaffeevollautomat ausgebildet, umfasst eine Brüheinheit zum Brühen eines Heißgetränks.
Die Vorrichtung kann auf einer Oberfläche aufgestellt werden, wobei ein Gehäuse eine Aufstellebene vorgibt. Hierbei können beispielsweise Stützelemente zum Einsatz kommen, deren unteren Enden die Aufstellebene definiert. Rechtwinklig zur Aufstellebene verläuft eine Hochachse der Vorrichtung. Üblicherweise wird die Vorrichtung auf eine horizontale Ebene aufgestellt, wobei die Hochachse der Vertikalen entsprechen würde.
Das Gehäuse umfasst neben Umfangswänden, die sich in Richtung der Hochachse erstrecken, eine Oberseite an dem der Aufstellebene zugewandten Ende des Gehäuses sowie eine Unterseite an dem der Aufstellebene zugeordneten Ende. Ober- und Unterseite können als zur Aufstellebene parallele Ebenen ausgebildet sein oder eine beliebige andere Form annehmen. Ebenso sind die Umfangswände als zur Aufstellebene senkrecht verlaufende Ebenen ausgebildet Weiter umfasst die Vorrichtung der Brüheinheit zugeordnete Dosiermittel. Diese umfassen eine Pulverkammer zum Dosieren einer Menge von der Brüheinheit zuzuführenden Pulvers, wobei durch eine Ein- und/oder Auslassöffnung Pulver in die Kammer zugeführt bzw. aus dieser entnommen werden kann.

Zum Dosieren, also dem Zuführen von definierten Mengen von Pulver zu der Brüheinheit in einem oder mehreren Vorgängen, wird die Pulverkammer zunächst in einer Befüllrotationsposition mit Pulver befüllt. Anschließend werden die Dosiermittel, insbesondere die Pulverkammer, durch Griffmittel um eine winklig zur Hochachse angeordnete Drehachse manuell in eine Auslassrotationsposition verstellt. Gegebenenfalls können die Dosiermittel nun in die Befüllrotationsposition zurück geführt werden.

In der Befüllrotationsposition der Dosiermittel kann durch eine Befüllöffnung Pulver in die Pulverkammer zugeführt werden. In der Auslassrotationsposition kann durch eine Auslassöffnung Pulver aus der Pulverkammer ausgelassen und der Brüheinheit zugeführt werden. Das Volumen der Pulverkammer begrenzt die pro Dosiervorgang zugeführte Menge von Pulver in die Brüheinheit.

Die Ein- bzw. Auslassöffnung ist so angeordnet, dass das Pulver in der Auslassrotationsposition durch Schwerkraft aus der Pulverkammer heraus geführt wird. Die Befüllöffnung und die Auslassöffnung können durch eine gemeinsame Öffnung ausgebildet sein. Alternativ können sie auch durch zwei unverbundene Öffnungen ausgebildet sein, wobei hier vorzugsweise die Auslassöffnung in der Befüllposition und/oder die Befüllöffnung in der Auslassposition so abgedeckt werden, dass kein Pulver durch sie aus der Pulverkammer heraus tritt.

Es können die Dosiermittel mittels der Griffmittel in axiale Richtung, also in Richtung der Drehachse, zwischen einer Befüllaxialposition und einer Auslassaxialposition verstellt werden. Insgesamt ergibt sich somit eine Befüllposition aus der Befüllrotationsposition in Kombination mit der Befüllaxialposition sowie eine Auslassposition aus der Kombination von Auslassaxialposition und Auslassrotationsposition. Die Verstellung der Dosiermittel zwischen Befüllposition und Auslassposition erfolgt also durch eine Überlagerung einer axialen translatorisch Verstellung und einer drehenden (rotatorischen) Verstellung. Hier ist die Befüllposition zur Auslassposition translatorisch versetzt.

Die Dosiermittel werden hier bevorzugt so weit heraus gezogen bis eine Befüllöffnung der Dosiermittel (vom Inneren des Gehäuses betrachtet) über die Umfangswand hinaus ragt, wodurch es ermöglicht wird, die Pulverkammer durch einen seitlichen Eingriff zu befüllen. Bevorzugt können die Dosiermittel zum Befüllen ganz oder teilweise entlang der Drehachse aus der Vorrichtung heraus gezogen werden.

Insbesondere ist es bei einer solchen Heißgetränkezubereitungsvorrichtung nicht zwingend notwenig, auf der Oberseite der Vorrichtung eine Zufuhröffnung für Pulver vorzusehen. Durch die Translationsbewegung kann das Pulver nah an die Brüheinheit heran geführt werden, ohne dass weite vertikale Führungsschächte benötigt würden, wodurch die Gestaltung bzw. Aufbau der Vorrichtung durch die Dosiermittel wenig beeinträchtigt wird. Auch ist es durch die Translationsbewegung möglich, die Pulverkammer seitlich aus dem Gehäuse heraus zu ziehen und somit die Pulverkammer durch einen seitlichen Eingriff zu Befüllen. Dies ist gegenüber einem Befüllen durch die Oberseite, insbesondere bei großen Gehäusen, deutlich komfortabler.

Durch das Herausziehen der Dosiermittel sind diese auch für eine Reinigung zugänglicher. Wenn die Dosiermittel ganz entnehmbar ausgebildet sind, sie sich also von der restlichen Vorrichtung lösen lasen, können sie besonders einfach und gründlich gereinigt werden. Auch lassen sich hierdurch Pulverreste sowohl in und/oder an den Dosiermitteln als auch an durch die Entnahme frei gelegten Bereichen der restlichen Vorrichtung entfernen.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Als vorteilhaft hat es sich herausgestellt, die Dosiermittel so auszubilden, dass die Griffmittel in einem axialen Endabschnitt der Dosiermittel angeordnet sind. Als axialer Endabschnitt sind hier die beiden, vorzugsweise freien, Enden der Dosiermittel in Richtung der Drehachse anzusehen. Hierbei ist ein axialer Endabschnitt der Griffmittel in axialer Richtung zu der Pulverkammer beabstandet. Die Griffmittel reichen also axial über die Pulverkammer hinaus (müssen diese aber nicht zwingend axial überschneiden). Um die Griffmittel (und hierdurch die Dosiermittel) bei dieser Anordnung manuell betätigen zu können, kann eine Öffnung in mindestens einer der Umfangswände vorgesehen sein. Unter "axialer Richtung" ist in dieser Anmeldung, sofern nicht abweichend angegeben, immer die Richtung der Drehachse zu verstehen.

Dieser Dosiervorgang mit Rotation der Pulverkammer zeichnet sich dadurch aus, dass das Pulver besonders kontrolliert in die Brüheinheit zugeführt werden kann. Insbesondere kann effektiv verhindert werden, dass vor Erreichen der Auslassposition Pulver aus der Pulverkammer austritt.

Durch die stirnseitige Anordnung in Richtung der Drehachse ist es möglich, die Dosiermittel mit einer einfachen Rotationsbewegung der Hand um den Unterarm (eine Pronation bzw. Supination) zu betätigen. Hierdurch kann können die Dosiermittel besonders angenehm bedient werden, wobei nicht umständlich um das Gerät herum gegriffen werden muss und auch keine Translationsbewegung des Armes in Rotationsrichtung notwendig ist. Zudem kann eine Krafteinwirkung auf die Griffmittel an zwei unterschiedlichen Umfangspositionen (in Bezug zur Drehachse) gleichzeitig wirken, wodurch sich ergonomischere Griffmittel mit geringerer Belastung für die Einzelfinger verwirklichen lassen. Besonders zweckmäßig ist es, wenn die Drehachse die Griffmittel durchläuft. Bevorzugt umfassen die Griffmittel Angriffspunkte für die Übertragung des Drehmoments für die Rotation, die bevorzugt zwischen 90° und 270 °, besonders bevorzugt zwischen 150° und 210°, weiter bevorzugt um 180°, um die Drehachse zu einander versetzt sind. Hierdurch lassen sich die Griffmittel immer gut greifen und bedienen.

Dies eine besonders komfortable Bedienung der Dosiermittel, wobei die Dosiermittel der Ausgestaltung der restlichen Vorrichtung möglichst große Spielräume lassen. Durch die Einfachheit des Dosiermechanismus, insbesondere ohne komplexe elektrische und/oder mechanische Mechanismen, sind die Dosiermittel wenig fehleranfällig und leicht zu warten. Durch die Rotation der Dosiermittel kann auf einfache und gleichwohl effektive Weise verhindert werden, dass Pulver vor Erreichen der Auslassrotationsposition aus der Pulverkammer tritt.

Bevorzugt sind die Dosiermittel, insbesondere die Pulverkammer, (auch) in der Befüllaxialposition, insbesondere gegen eine Schwerkraftseinwirkung, gehalten. Hierdurch werden Fehlbedienungen - wie ein versehentliches Fallenlassen - wirksam unterbunden. Es kann vorgesehen sein, dass diese Halterung bei Bedarf - etwa zum Reinigen - gelöst werden kann.

Besonders bevorzugt sind die Griffmittel bei einer Heißgetränkevorrichtung nach Anspruch 1 und/oder 2 in einer bevorzugt dem Nutzer zugewandten Frontwand und/oder axial auf Höhe der Frontwand angeordnet, also insbesondere der Umfangswand der Vorrichtung, die dem Benutzer zugewandt ist und an der bevorzugt Bedienelemente und/oder ein Auslauf in ein Trinkbehältnis vorgesehen sind. Bei einer solchen Anordnung können die Dosiermittel eine Translationsbewegung durchführen, ohne dass hierdurch ein erhöhter Platzbedarf benötigt wäre. Die Frontwand der Vorrichtung muss für den Betrieb (Platzieren des Trinkbehältnisses) ohnehin frei sein. Die weiteren Seiten der Vorrichtung, insbesondere die Umfangswände außer der Frontwand sowie Ober- und Unterseite, können unzugänglich blockiert werden, ohne dass dies die Funktionalität der Dosiermittel beeinträchtigen würde. Somit ermöglicht diese bevorzugte Ausgestaltung es, die Vorrichtung auch bei engem Aufstellraum mit allen Vorteilen der Erfindung einzusetzen.

Durch den erfindungsgemäßen Aufbau wird eine gute Bedienbarkeit der Dosiermittel und ein kompakter Aufbau der Vorrichtung ermöglicht. So wird es durch die stirnseitige Anordnung der Griffmittel ermöglicht, dass diese - in den zwei Rotationspositionen wie auch beim Übergang zwischen diesen - nicht oder nur geringfügig über die Umfangswand hinaus ragen. Hierdurch ist der Platzbedarf für die Betätigung gering, wodurch sich die Vorrichtung auch in engen Umgebungen nutzen lässt und diese weniger durch äußere Gegenstände gestört wird.

Bevorzugt sind die Dosiermittel so in der Vorrichtung geführt, dass die Dosiermittel, insbesondere die Pulverkammer, in der Vorrichtung nur durch eine Rotation um die Drehachse und eine Translation in Richtung der Drehachse bewegbar sind. Hierdurch wird eine gute Funktionalität bei kompaktem Aufbau ermöglicht. Es kann gegebenenfalls ein (beispielsweise mit einem Deckel) abdeckbarer, Zufuhrschacht zu den Dosiermitteln vorgesehen ist.

Vorteilhaft können Verriegelungsmittel vorgesehen sein, die in Abhängigkeit eines Zubereitungszustandes, insbesondere der Brüheinheit und/oder der Bedienelemente, die Dosiermittel in ihrer Lage und/oder Position, insbesondere Rotationslage zur Drehachse und/oder Translationsposition in Richtung der Drehachse, mechanisch verriegeln bzw. fixieren. So ist es beispielsweise möglich, eine weitere Betätigung der Dosiermittel zu unterbinden, falls die Brüheinheit bereits über eine definierte Menge befüllt ist.

Durch Führungsmittel kann die Bewegung zwischen der Befüllposition und der Auslassposition (und/oder die umgekehrte Bewegung) vorgegeben werden. So kann es vorgesehen sein, dass die Doseiermittel durch die Führungsmittel erst - wie beschrieben - axial in die Auslassaxialposition bewegt werden (hierbei rotatorisch in ihrer Bewegung beschränkt werde) und anschließend rotatorisch verstellt werden können. Alternativ kann während einer axialen Bewegung bereits vor der Auslassaxialposition ein verdrehen erfolgen, wobei die Führungsmittel hier durch eine vorbestimmte Kulisse eine axiale Kraft bzw. Bewegung in einer rotatorische Kraft bzw. Bewegung umsetzen können, wodurch sich die Handhabbarkeit der Vorrichtung erhöhen lässt.

Es ist nicht ausgeschlossen, dass das Pulver auch über eine über einen an der Oberseite angeordneten Schacht zugeführt werden könnte. Diese Zufuhr könnte mit einem Deckel verschließbar sein, wobei Deckel verriegelt werden kann.

Zur Überwachung der Lage und/oder Position der Dosiermittel können Lagesensormittel, beispielsweise Kontaktschleifen, vorgesehen sein. Auch kann der Brühprozess in Abhängigkeit der Lage der Dosiermittel gesteuert werden. beispielsweise kann der Brühprozess erst nach Verweilen in der Auslassposition freigegeben oder automatisch gestartet werden.

Keine der Seiten des Gehäuses muss eben sein. Zwar erstrecken sich die Umfangswände in Richtung der Hochachse, dieses bedeutet aber auch nicht, dass diese zwingend vollständig parallel zu dieser, also eben, ausgebildet sind. Vielmehr kommen auch beispielsweise gewölbte Oberflächen in betracht.

Die Drehachse ist vorzugsweise parallel zur Aufstellfläche, also üblicherweise horizontal.

Sowohl durch die frontseitige Anordnung der Griffmittel als auch durch die Kombination von axialer und rotatorischer Bewegung zwischen Befüll- und Auslassposition wird ein Aufbau der Vorrichtung ermöglicht, bei dem an der Oberseite keine Mittel (insbesondere Öffnungen, Schächte, Deckel, Griffe) für die Pulverzufuhr an der Oberseite des Gehäuses vorgesehen sein müssen. Hierdurch werden die entsprechenden Bereiche frei und sind für andere Funktionalitäten nutzbar, beispielsweise zum Vorsehen einer Heizplatte oder zur Integration der Vorrichtung in ein System, bei dem die Oberseite des Gehäuses unzugänglich ist.

Bevorzugt sind die Pulvereinfüllöffnung und/oder -einfüllöffnung in der Auslassaxialposition vollständig innerhalb des Gehäuses. Hierdurch sind diese vor äußeren Einflüssen geschützt.

Weitere Vorteile, Merkmale und Einzelheiten der Erfindung ergeben sich aus der nachfolgenden Beschreibung eines bevorzugten Ausführungsbeispiels sowie anhand der Zeichnungen.

### Diese zeigen in:

- Fig. 1: ein Ausführungsbeispiel von Dosiermitteln für eine erfindungsgemäße Heißgetränkezubereitungsvorrichtung in einer perspektivischen Ansicht, und in
- Fig. 2: die Dosiermittel aus Fig. 1 in einer Schnittansicht,
- Fig. 3: schematische Darstellung einer Heißgetränkezubereitungsvorrichtung mit den Dosiermittel aus Fig. 1 und 2.

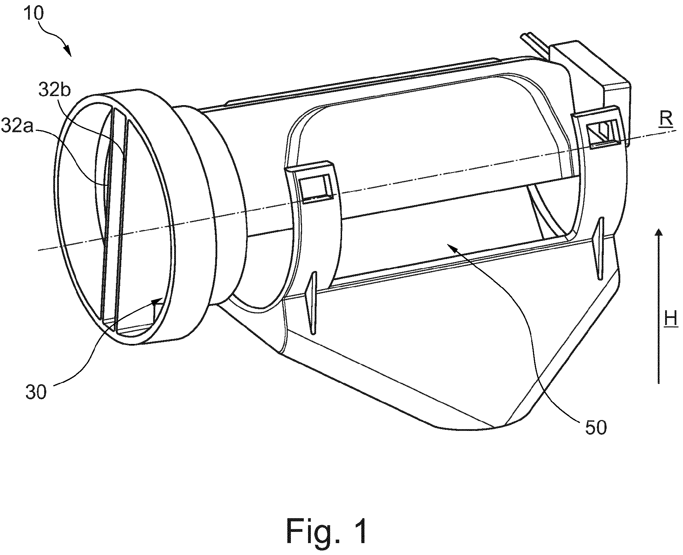

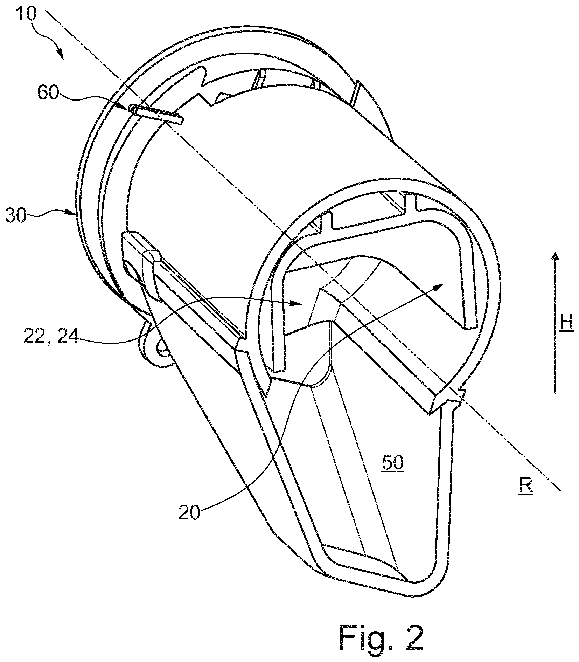

Die in den Figuren 1 und 2 gezeigten Dosiermittel 10 weisen eine im Wesentlichen zylindrische Außenkontur auf und umfassen eine Pulverkammer 20, die durch Materialschluss kraftübertragend mit Griffmitteln 30 verbunden sind, die sich stirnseitig in einem axialen Endabschnitt der Dosiermittel befinden. Die Mantelseite der Dosiermittel 10 ist frei von Griffmitteln.

Die Pulverkammer 20 ist auf einer Seite offen, wobei durch diese Öffnung gleichzeitig eine Befüllöffnung 22 zum Befüllen der Pulverkammer 20 mit Pulver als auch eine Auslassöffnung 24 zum Auslassen von Pulver aus der Pulverkammer 20 ausgebildet wird. Unterhalb der Pulverkammer ist ein Pulverschacht 50 dargestellt, über den Pulver in eine (nicht dargestellte) Brüheinheit geführt wird.

Die Dosiermittel 10 sind in der Vorrichtung um eine Drehachse R drehbar gelagert, wobei die Griffmittel 30 stirnseitig an den Dosiermitteln 10, also an einem der freien Enden der Dosiermittel 10, angeordnet sind. Die Drehachse R ist winklig zu einer Hochachse H angeordnet ist, welche hier der Vertikalrichtung entspricht.

Die Griffmittel 30 umfassen zwei Angriffsflächen 32a bzw. 32b über die eine Bedienperson ein Drehmoment an zwei unterschiedlichen Umfangspositionen übertragen kann. Durch die stirnseitige Anordnung und die beiden Angriffsflächen 32a bzw. 32b ist eine besonders ergonomische Bedienung der Dosiermittel möglich. So können diese durch eine reine Rotationsbewegung der Hand betätigt werden, wobei durch die Angriffsflächen die Belastung auf mehrere Finger verteilt werden kann.

Durch Rotation um die Drehachse R werden die Dosiermittel zwischen einer Befüllrotationsposition und einer Auslassrotationsposition verdreht.

Zum Zuführen von Pulver in die Pulverkammer 20 sind die Dosiermittel, insbesondere die Pulverkammer 20, in Richtung der Drehachse translatorisch verstellbar, wodurch es ermöglicht wird diese zum Befüllen aus dem Gerätegehäuse heraus zu ziehen. Alternativ kann ein Zufuhrschacht, beispielsweise mit einer aus dem Stand der Technik bekannten Zuführöffnung an der Oberseite der Vorrichtung, vorgesehen sein, über den das Pulver zur Pulverkammer 20 zugeführt wird.

An den Dosiermitteln 30 ist eine Kontaktsensor 60 vorgesehen, der die Lage der Dosiermittel, insbesondere das Erreichen der Befüllpsoition und/oder der Auslassposition, erfassen kann. Hierdurch kann beispielsweise der Brühprozess erst nach Verweilen in der Auslassposition freigegeben oder automatisch gestartet werden.

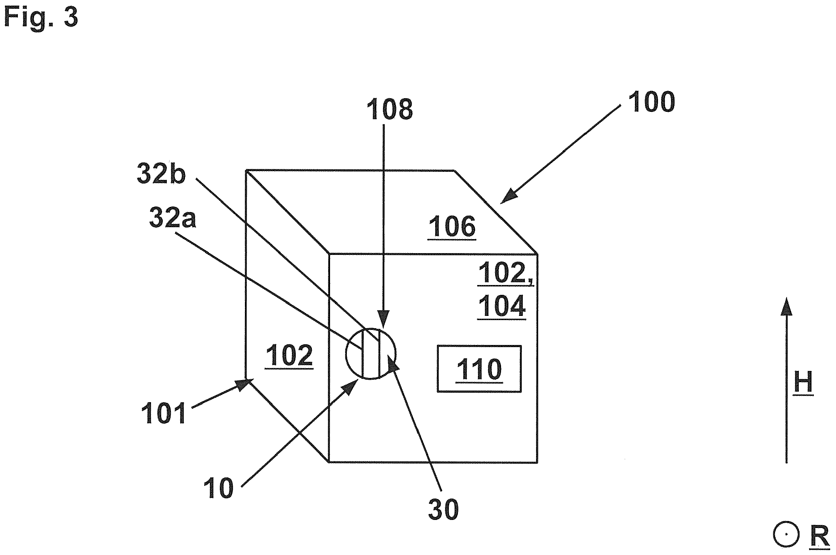

In Fig. 3 sind die Dosiermittel 30 aus Fig. 1 und 2 in einer Heißgetränkezubereitungsvorrichtung 100 dargestellt. Die Heißgetränkezubereitungsvorrichtung 100 umfasst vier sich in Richtung der Hochachse H erstreckende Umfangswände 102, die von denen eine die dem Benutzer zugewandte Frontseite 104 ist, sowie eine Oberseite 106 und eine (nicht dargestellte) Unterseite. Die Umfangswände 102 , die Oberseite 106 und die Unterseite sind Teil eines Gehäuses 101.

Die Dosiermittel 30 sind hier neben einem Auslass 110 für Heißgetränke in der Frontwand 102 angeordnet, wobei sie durch Translationsbewegung in Richtung der Drehachse R aus der Frontwand 102 herausziehbar. Zur Betätigung der Griffmittel 30 sowie zum Ermöglichen des Herausziehens ist in der Frontwand 102 eine Öffnung 108 vorgesehen.

### Bezugszeichen

- 10: Dosiermittel
- 20: Pulverkammer
- 22: Befüllöffnung
- 24: Auslassöffnung
- 30: Griffmittel
- 50: Pulverschacht

- 100: Heißgetränkezubereitungsvorrichtung
- 101: Gehäuse
- 102: Umfangswände
- 104: Frontwand
- 106: Oberseite
- 108: Öffnung
- 110: Auslass für Heißgetränke

- H: Hochachse
- R: Drehachse

## Patentansprüche

1. Heißgetränkezubereitungsvorrichtung (100), insbesondere Kaffeevollautomat, mit einer Brüheinheit, mit einem Gehäuse, das sich in Richtung einer rechtwinklig zu einer durch das Gehäuse definierten Aufstellebene erstreckenden Hochachse (H) erstreckende Umfangswände (102), eine Oberseite (106) sowie eine Unterseite umfasst, mit der Brüheinheit zugeordneten Dosiermitteln (10), mit einer Pulverkammer (20) zum Dosieren einer Menge von der Brüheinheit zuzuführenden Pulvers, der eine Ein- und/oder Auslassöffnung zum Befüllen bzw. Entleeren von Pulver in/aus der Pulverkammer zugeordnet ist,
wobei die Dosiermittel (10) zum Zuführen des Pulvers in die Brüheinheit durch Griffmittel (30) um eine winklig zur Hochachse (H) angeordnete Drehachse (R) manuell zwischen einer Befüllrotationsposition und einer Auslassrotationsposition verdrehbar ausgebildet sind,
**dadurch gekennzeichnet,**
**dass** die Dosiermittel (10) mit Hilfe der Griffmittel (30) translatorisch entlang der Drehachse (R) zwischen einer der Befüllrotationsposition zugeordneten Befüllaxialposition zum Befüllen der Pulverkammer (20) und einer von der Befüllaxialposition entlang der Drehachse versetzten, der Auslassrotationsposition zugeordneten Auslassaxialposition zum Auslassen von Pulver aus der Pulverkammer (20) verstellbar sind.

2. Vorrichtung nach Anspruch 1,
**dadurch gekennzeichnet,**
**dass** die Pulverkammer, insbesondere die Ein- bzw. Auslassöffnung, in der Befüllaxialposition der Dosiermittel zumindest abschnittsweise, bevorzugt vollständig axial entlang der Drehachse (R) außerhalb des Gehäuses angeordnet sind, insbesondere seitlich des Gehäuses, und/oder dass die Pulverkammer (20), insbesondere die Ein- bzw. Auslassöffnung, in der Auslassaxialposition der Dosiermittel zumindest abschnittsweise, bevorzugt vollständig, axial entlang der Drehachse (R) innerhalb des Gehäuses angeordnet sind

3. Vorrichtung nach Anspruch 1 oder 2,
**dadurch gekennzeichnet,**
**dass** Führungsmittel vorgesehen sind, die zum Beschränken der Rotationslage der Dosiermittel beim Verstellen zwischen Befüllaxialposition und Auslassaxialposition, und/oder in der Befüllaxialposition und/oder in der Auslassaxialposition ausgebildet und angeordnet sind.

4. Vorrichtung nach Anspruch 3,
**dadurch gekennzeichnet,**
**dass** die Führungsmittel die Rotationslage der Dosiermittel außerhalb der Auslassaxialposition auf die Befüllrotationslage beschränken und in der Auslassaxialposition eine Rotation in die Auslassrotationsposition frei geben, wobei die Führungsmittel bevorzugt die Axialposition der Dosiermittel entlang der Drehachse in eine Richtung, bevorzugt in beide Richtungen, beschränkend ausgebildet sind.

5. Vorrichtung nach einem der vorhergehenden Ansprüche,
**dadurch gekennzeichnet,**
**dass** die Drehachse (R) winklig, bevorzugt rechtwinklig, zu der durchsetzten Umlaufwand (102) und/oder der Hochachse (H) und/oder parallel zur Aufstellfläche ausgerichtet ist.

6. Vorrichtung nach einem der vorhergehenden Ansprüche,
**dadurch gekennzeichnet,**
**dass** ein axialer Endabschnitt der Griffmittel (30) in Richtung der Drehachse (R) in einem axialen Endabschnitt der Dosiermittel (10), bevorzugt stirnseitig, axial beabstandet zur Pulverkammer (20) und/oder zur Ein- bzw. Auslassöffnung angeordnet ist.

7. Vorrichtung nach einem der vorhergehenden Ansprüche,
**dadurch gekennzeichnet,**
**dass** zwei in Umlaufrichtung der Drehachse (R) beabstandete Angriffspunkte (32a, 32b) zur Übertragung eines Drehmoments an den Griffmitteln (30) vorgesehen sind, die bevorzugt zwischen 90° und 270°, besonders bevorzugt zwischen 150° und 210°, weiter bevorzugt um 180°, um die Drehachse (R) zu einander versetzt sind, wobei die Griffmittel bevorzugt einen von der Drehachse durchsetzten Griffsteg umfassen, an dem die Angriffspunkte (32a, 32b) angeordnet sind.

8. Vorrichtung nach einem der vorhergehenden Ansprüche,
**dadurch gekennzeichnet,**
**dass** Verriegelungsmittel vorgesehen sind, die in Abhängigkeit eines Zubereitungszustandes, insbesondere der Brüheinheit und/oder der Bedienelemente, die Dosiermittel in ihrer Lage und/oder Position, insbesondere Rotationslage zur Drehachse und/oder Axialposition in Richtung der Drehachse, beschränken oder fixieren können, bevorzugt unter Berücksichtigung einer durch fakultative Sensormittel erfassten Lage und/oder Position der Dosiermittel (10).

9. Vorrichtung nach einem der vorhergehenden Ansprüche,
**dadurch gekennzeichnet,**
**dass** mindestens eine der Umfangswände (102) eine den Dosiermitteln zugeordnete Öffnung (108) aufweist, die bevorzugt in der als Frontwand (104) ausgebildeten Umfangswand (102) der Vorrichtung angeordnet ist, an der weiter bevorzugt ein Auslass (110) für das Heißgetränk vorgesehen ist.

10. Vorrichtung nach Anspruch 9,
**dadurch gekennzeichnet,**
**dass** die Dosiermittel so ausgebildet und angeordnet sind, dass die Pulverkammer bei einer Verstellung zwischen Befüllaxialposition und Auslassaxialposition zumindest abschnittsweise die Öffnung (108) durchläuft.

11. Vorrichtung nach einem der vorhergehenden Ansprüche,
**dadurch gekennzeichnet,**
**dass** die Griffmittel (30) in der Auslassaxialposition und/oder der Befüllaxialposition axial in Richtung der Drehachse zumindest abschnittsweise außerhalb des Gehäuses, auf Höhe des Gehäuses oder im Gehäuse angeordnet sind.

12. Vorrichtung nach einem der vorhergehenden Ansprüche,
**dadurch gekennzeichnet,**
**dass** Pulverführungsmittel, insbesondere mit einem Pulverschacht, zwischen der Pulverkammer und der Brüheinheit, insbesondere zum Führen von Pulver von der Auslassöffnung der Pulverkammer zur Brüheinheit in Auslassrotations- und/oder Auslassaxialposition, vorgesehen sind.

13. Vorrichtung nach einem der vorhergehenden Ansprüche,
**dadurch gekennzeichnet,**
**dass** die Dosiermittel als länglicher Körper, bevorzugt mit einer im Wesentlichen zylindrische Außenkontur, mit einer sich in Umfangsrichtung erstreckenden Mantelfläche ausgebildet sind, wobei die Griffmittel bevorzugt nicht seitlich an der Mantelfläche der Dosiermittel angeordnet sind.

14. Vorrichtung nach einem der vorhergehenden Ansprüche,
**dadurch gekennzeichnet,**
**dass** die Oberseite frei von Dosiermitteln und diesen zugeordneten Komponenten, wie insbesondere Öffnungen, Schächte, Deckel, Griffmittel und/oder Bedienelemente, ist.

15. Verfahren zum Bedienen von Dosiermitteln einer Heißgetränkezubereitungsvorrichtung, insbesondere nach einem der Ansprüche 1 bis 14, mit einer Pulverkammer (20) zum Dosieren einer Menge von der Brüheinheit zuzuführenden Pulvers, der eine Ein- und/oder Auslassöffnung zum Befüllen bzw. Entleeren von Pulver in/aus der Pulverkammer zugeordnet ist, wobei die Dosiermittel (10) zum Zuführen des Pulvers in die Brüheinheit durch Griffmittel (30) um eine winklig zur Hochachse (H) angeordnete Drehachse (R) manuell zwischen einer Befüllrotationsposition und einer Auslassrotationsposition verdreht werden und wobei die Dosiermittel mit Hilfe der Griffmittel (30) entlang der Drehachse (R) zwischen einer der Befüllrotationsposition zugeordneten Befüllaxialposition zum Befüllen der Pulverkammer (20) und einer von der Befüllaxialposition entlang der Drehachse versetzten, der Auslassrotationsposition zugeordneten Auslassaxialposition zum Auslassen von Pulver aus der Pulverkammer (20) verstellt werden, umfassend die folgenden Schritte:
- Befüllen der Pulverkammer (20) mit Pulver in der Befüllaxialposition und Befüllrotationsposition,
- axiales, translatorisches Versetzen der Dosiermittel entlang der Drehachse (R) in die Auslassaxialposition, und
- zumindest teilweise zum Axialversetzen gleichzeitiges oder nachfolgendes Rotieren der Dosiermittel um die Drehachse (R) in die Auslassrotationsposition, insbesondere durch eine Supination oder Pronation einer Hand einer Bedienperson.

## Claims

1. A hot beverage preparation device (100), in particular coffee maker, having a brewing unit, and having a housing including circumferential walls (102) extending in a direction to a height axis (H) extending rectangular to an installation surface defined by the housing, a top side (106) as well as a lower side, and having dosing means (10) assigned to the brewing unit, having a powder chamber (20) for dosing an amount of powder to be fed by the brewing unit, the powder chamber having assigned an inlet and/or outlet opening for filling or emptying powder into/out of the powder chamber,
wherein the dosing means (10) for feeding the powder into the brewing unit by means of gripping means (30) are designed to be manually twistable between a filling rotational position and an outlet rotational position about a rotational axis (R) arranged at an angle relative to the height axis (H),
**characterized in that**
the dosing means (10) are adjustable using the gripping means (30) in a translational manner along the rotational axis (R) between an axial filling position assigned to the rotational filling position for filling the powder chamber (20) and an outlet axial position offset from the filling axial position along the rotational axis, assigned to the outlet rotational position for discharging powder from the powder chamber (20).

2. The device according to Claim 1,
**characterized in that**
the powder chamber, in particular the inlet and/or outlet opening, at least in sections in the filling axial position of the dosing means, are preferably completely arranged axially outside the housing along the rotational axis (R), in particular laterally with respect to the housing, and/or **in that** the powder chamber (20), in particular the inlet and/or outlet opening, at least in sections in the outlet axial position of the dosing means, are arranged, preferably completely, axially along the rotational axis (R) inside the housing.

3. The device according to Claim 1 or 2,
**characterized in that**
guidance means are provided, which are designed and arranged for restricting the rotational position of the dosing means when adjusting between filling axial position and outlet axial position, and/or in the filling axial position and/or in the outlet axial position.

4. The device according to Claim 3,
**characterized in that**
the guidance means restrict the rotational position of the dosing means outside the outlet axial position to the filling rotational position and release a rotation into the rotational outlet position in the rotational axial position, wherein the guidance means are preferably designed for restricting the axial position of the dosing means along the rotational axis in one direction, preferably in both directions.

5. The device according to one of the preceding Claims,
**characterized in that**
the rotational axis (R) is oriented at an angle, preferably rectangular, relative to the penetrated circumferential wall (102) and/or the height axis (H) and/or in parallel to the installation surface.

6. The device according to one of the preceding Claims,
**characterized in that**
an axial end section of the gripping means (30) is arranged in a direction to the rotational axis (R) in an axial end section of the dosing means (10), preferably face-sided, axially spaced to the powder chamber (20) and/or the inlet and/or outlet opening.

7. The device according to one of the preceding Claims,
**characterized in that**
two engagement points (32a, 32b) are provided in circumferential direction of the rotational axis (R) for transmitting a torque on the gripping means (30), which are offset to one another around the rotational axis (R) by preferably between 90° and 270°, particularly preferably between 150° and 210°, further preferably by 180°, wherein the gripping means preferably include a gripping web penetrated by the rotational axis and having the engagement points (32a, 32b) arranged thereon.

8. The device according to one of the preceding Claims,
**characterized in that**
locking means are provided, which, according to a preparation state, in particular of the brewing unit and/or the operational elements, can restrict or fix the dosing means in their posture and/or position, in particular the rotational position relative to the rotational axis and/or the axial position in direction to the rotational axis, preferably by taking into account a posture and/or position of the dosing means (10) detected by facultative sensor means.

9. The device according to one of the preceding Claims,
**characterized in that**
at least one of the circumferential walls (102) comprises an opening (108) assigned to the dosing means, which preferably is arranged in the circumferential wall (102) of the device designed as a front wall (104), on which further preferably an outlet (110) for the hot beverage is provided.

10. The device according to Claim 9,
**characterized in that**
the dosing means are designed and arranged in such a way, that upon adjustment between the filling axial position and the outlet axial position, the powder chamber traverses the opening (108) at least in sections.

11. The device according to one of the preceding Claims,
**characterized in that**
in the outlet axial position and/or the filling axial position, the gripping means (30) are arranged axially in the direction to the rotational axis at least in sections outside the hosing, on the level of the housing or in the housing.

12. The device according to one of the preceding Claims,
**characterized in that**
powder guidance means, in particular having a powder duct, are provided between the powder chamber and the brewing unit, in particular for guiding powder from the outlet opening of the powder chamber to the brewing unit in the outlet rotational position and/or the outlet axial position.

13. The device according to one of the preceding Claims,
**characterized in that**
the dosing means are designed as elongated body, preferably having an essentially cylindrical outer contour, and having a shell surface extending in circumferential direction, wherein preferably the gripping means are not arranged laterally on the shell surface of the dosing means.

14. The device according to one of the preceding Claims,
**characterized in that**
the top side is free of dosing means and components assigned thereto, such as in particular openings, ducts, lids, gripping means and/or operational elements.

15. A method for operating dosing means of a hot beverage preparation device, in particular according to one of Claims 1 to 14, with a powder chamber (20) for dosing an amount of powder to be fed by the brewing unit, which has assigned an inlet and/or outlet opening for filling or emptying powder into/out of the powder chamber, wherein the dosing means (10) for feeding the powder into the brewing unit are twisted manually between a filling rotational position and an outlet rotational position about a rotational axis (R) arranged at an angle to the height axis (H) by means of gripping means (30) and wherein the dosing means, by means of the gripping means (30), are adjusted along the rotational axis (R) between an filling axial position assigned to the filling rotational position for filling the powder chamber (20) and an axial outlet position offset from the filling axial position along the rotational axis, assigned to the outlet rotational position for discharging powder from the powder chamber (20) and, comprising the following steps:
- filling the powder chamber (20) with powder in the filling axial position and the filling rotational position,
- axial, translational offsetting of the dosing means along the rotational axis (R) into the outlet axial position, and
- at least partially relative to the axial offsetting, simultaneous or subsequent rotating of the dosing means about the rotational axis (R) into the outlet rotational position, in particular by a supination or pronation of a hand of an operating person.

## Revendications

1. Dispositif de préparation de boissons chaudes (100), en particulier machine à café automatique, avec une unité de percolation, avec un boîtier, qui comprend des parois périphériques (102) s'étendant dans la direction d'un axe vertical (H) qui s'étend perpendiculairement à un plan de pose défini par le boîtier, un côté supérieur (106) ainsi qu'un côté inférieur, avec des moyens de dosage (10) associés à l'unité de percolation, avec une chambre à poudre (20) pour le dosage d'une quantité de poudre à fournir à l'unité de percolation, à laquelle est associée une ouverture d'entrée et/ou de sortie pour verser ou vider la poudre dans/hors de la chambre à poudre, dans lequel les moyens de dosage (10) pour amener la poudre dans l'unité de percolation sont réalisés par des moyens de prise (30) pouvant tourner autour d'un axe de rotation (R) disposé de façon inclinée par rapport à l'axe vertical (H) manuellement entre une position rotative de remplissage et une position rotative de vidange,
**caractérisé en ce que** les moyens de dosage (10) sont déplaçables à l'aide des moyens de prise (30) en translation le long de l'axe de rotation (R) entre une position axiale de remplissage associée à la position rotative de remplissage pour remplir la chambre à poudre (20) et une position axiale de vidange associée à la position rotative de vidange, décalée de la position axiale de remplissage le long de l'axe de rotation, pour la vidange de la poudre hors de la chambre à poudre (20).

2. Dispositif selon la revendication 1, **caractérisé en ce que** la chambre à poudre, en particulier l'ouverture d'entrée ou de sortie, dans la position axiale de remplissage des moyens de dosage, sont disposées au moins partiellement, de préférence totalement axialement le long de l'axe de rotation (R) à l'extérieur du boîtier, en particulier latéralement au boîtier, et/ou **en ce que** la chambre à poudre (20), en particulier l'ouverture d'entrée ou de sortie, dans la position axiale de vidange des moyens de dosage, sont disposées au moins partiellement, de préférence totalement, axialement le long de l'axe de rotation (R) à l'intérieur du boîtier.

3. Dispositif selon la revendication 1 ou 2, **caractérisé en ce qu'**il est prévu des moyens de guidage, qui sont configurés et disposés de façon à limiter la position de rotation des moyens de dosage lors du déplacement entre la position axiale de remplissage et la position axiale de vidange, et/ou dans la position axiale de remplissage et/ou dans la position axiale de vidange.

4. Dispositif selon la revendication 3, **caractérisé en ce que** les moyens de guidage sont formés de sorte à limiter la position rotative des moyens de dosage à l'extérieur de la position axiale de vidange à la position rotative de remplissage et dans la position axiale de vidange libèrent une rotation dans la position rotative de vidange, dans lequel les moyens de guidage sont formés pour limiter de préférence la position axiale des moyens de dosage le long de l'axe de rotation dans une direction, de préférence dans les deux directions.

5. Dispositif selon l'une quelconque des revendications précédentes, **caractérisé en ce que** l'axe de rotation (R) est orienté de façon inclinée, de préférence perpendiculaire, par rapport à la paroi périphérique traversée (102) et/ou à l'axe vertical (H) et/ou parallèlement à la face de pose.

6. Dispositif selon l'une quelconque des revendications précédentes, **caractérisé en ce qu'**une partie d'extrémité axiale des moyens de prise (30) est disposée dans la direction de l'axe de rotation (R) dans une partie d'extrémité axiale des moyens de dosage (10), de préférence frontalement, axialement à distance de la chambre à poudre (20) et/ou de l'ouverture d'entrée ou de sortie.

7. Dispositif selon l'une quelconque des revendications précédentes, **caractérisé en ce qu'**il est prévu deux points de saisie (32a, 32b) espacés dans la direction périphérique de l'axe de rotation (R) pour la transmission d'un couple de rotation aux moyens de prise (30), qui sont décalés l'un de l'autre de préférence entre 90° et 270°, de préférence entre 150° et 210°, de préférence encore de 180°, autour de l'axe de rotation (R), dans lequel les moyens de prise comprennent de préférence une bride de prise traversée par l'axe de rotation, sur laquelle les points de saisie (32a, 32b) sont disposés.

8. Dispositif selon l'une quelconque des revendications précédentes, **caractérisé en ce qu'**il est prévu des moyens de verrouillage, qui peuvent limiter ou fixer, en fonction d'un état de préparation, en particulier de l'unité de percolation et/ou des éléments de commande, les moyens de dosage dans leur placement et/ou position, en particulier la position rotative par rapport à l'axe de rotation et/ou la position axiale dans la direction de l'axe de rotation, de préférence en tenant compte d'un placement et/ou d'une position des moyens de dosage (10) détecté(e) par des moyens de capteur facultatifs.

9. Dispositif selon l'une quelconque des revendications précédentes, **caractérisé en ce qu'**au moins une des parois périphériques (102) présente une ouverture (108) associée aux moyens de dosage, qui est disposée de préférence dans la paroi périphérique (102) du dispositif formée en tant que paroi frontale (104), sur laquelle il est de préférence encore prévu une sortie (110) pour la boisson chaude.

10. Dispositif selon la revendication 9, **caractérisé en ce que** les moyens de dosage sont configurés et disposés de telle manière que la chambre à poudre traverse au moins partiellement l'ouverture (108) lors d'un déplacement entre la position axiale de remplissage et la position axiale de vidange.

11. Dispositif selon l'une quelconque des revendications précédentes, **caractérisé en ce que** les moyens de prise (30) dans la position axiale de vidange et/ou la position axiale de remplissage sont disposés axialement dans la direction de l'axe de rotation au moins par portions à l'extérieur du boîtier, à hauteur du boîtier ou dans le boîtier.

12. Dispositif selon l'une quelconque des revendications précédentes, **caractérisé en ce qu'**il est prévu des moyens de guidage de poudre, en particulier avec une conduite à poudre, entre la chambre à poudre et l'unité d'infusion, en particulier pour le guidage de la poudre de l'ouverture de sortie de la chambre à poudre à l'unité d'infusion dans la position rotative de vidange et/ou la position axiale de vidange.

13. Dispositif selon l'une quelconque des revendications précédentes, **caractérisé en ce que** les moyens de dosage sont réalisés en forme de corps allongé, de préférence avec un contour extérieur essentiellement cylindrique, avec une surface latérale s'étendant dans la direction périphérique, dans lequel les moyens de prise ne sont de préférence pas disposés latéralement à la surface latérale des moyens de dosage.

14. Dispositif selon l'une quelconque des revendications précédentes, **caractérisé en ce que** le côté supérieur est exempte moyens de dosage et de composants associés à ceux-ci, comme en particulier des ouvertures, des puits, des couvercles, des moyens de prise et/ou des éléments de commande.

15. Procédé de commande de moyens de dosage d'un dispositif de préparation de boissons chaudes, en particulier selon l'une quelconque des revendications 1 à 14, avec une chambre à poudre (20) pour le dosage d'une quantité de poudre à fournir à l'unité de percolation, à laquelle est associée une ouverture d'entrée et/ou de sortie pour verser ou vider la poudre dans/hors de la chambre à poudre, dans lequel on fait tourner les moyens de dosage (10) pour amener la poudre dans l'unité de percolation par des moyens de prise (30) autour d'un axe de rotation (R) disposé de façon inclinée par rapport à l'axe vertical (H) manuellement entre une position rotative de remplissage et une position rotative de vidange, et dans lequel on déplace les moyens de dosage à l'aide des moyens de prise (30) le long de l'axe de rotation (R) entre une position axiale de remplissage associée à la position rotative de remplissage pour remplir la chambre à poudre (20) et une position axiale de vidange associée à la position rotative de vidange, décalée de la position axiale de remplissage le long de l'axe de rotation, pour la vidange de la poudre hors de la chambre à poudre (20), comprenant les étapes suivantes:
- remplir la chambre à poudre (20) avec de la poudre dans la position axiale de remplissage et la position rotative de remplissage,
- déplacer axialement en translation les moyens de dosage le long de l'axe de rotation (R) dans la position axiale de vidange, et
- faire tourner au moins partiellement, en même temps ou après le déplacement axial, les moyens de dosage autour de l'axe de rotation (R) dans la position rotative de vidange, en particulier par une supination ou une pronation d'une main d'un opérateur.
